# EUROPEAN PATENT APPLICATION

(11) **EP 4 625 511 A1**
(43) Date of publication of application: **01.10.2025**
(21) Application number: 25166419.9
(22) Date of filing: 26.03.2025
(51) Int. Cl.: H01M 4/04, H01M 4/13, H01M 10/0562, H01M 4/36, H01M 4/38, H01M 4/40, H01M 4/62, H01M 4/66, H01M 10/0525, H01M 10/0585, H01M 4/139, H01M 4/587

(54) **SOLID-STATE SECONDARY BATTERY, AND METHODS OF PREPARING AND CHARGING THE SOLID-STATE SECONDARY BATTERY**

(30) Priority: 29.03.2024 JP 2024057407; 12.09.2024 KR 20240125001
(71) Applicant: Samsung Electronics Co., Ltd., Suwon-si, Gyeonggi-do 16677 (KR)
(72) Inventor: YASHIRO, Nobuyoshi, Yokohama-city, 230-0027 (JP); SUZUKI, Shinya, Yokohama-city, 230-0027 (JP); SUGATA, Shoichi, Yokohama-city, 230-0027 (JP); ASANO, Tetsuya, Yokohama-city, 230-0027 (JP)
(74) Representative: Elkington and Fife LLP

(57) **Abstract**

A solid-state secondary battery, a method of preparing thereof, and a method of charging the solid-state secondary battery. The solid-state secondary battery includes a cathode layer containing lithium, an anode layer containing lithium and silver, and a solid electrolyte layer disposed between the cathode layer and the anode layer, wherein the anode layer includes a coating layer, a lithium alloy layer, and an anode current collector, and a bonding rate at the interface between the coating layer and the lithium alloy layer is about 85 percent to about 100 percent, and the total number of moles of lithium included in the cathode layer and the anode layer is about 30 times to about 120 times greater than the total number of moles of silver included in the solid-state secondary battery.

## Description

### FIELD OF THE INVENTION

The disclosure relates to a solid-state secondary battery, a method of preparing the solid-state secondary battery, and a method of charging the solid-state secondary battery.

### BACKGROUND OF THE INVENTION

Since lithium has a capacity density (capacity per unit weight) about 10 times higher than that of graphite, which has been conventionally used as an anode active material, thin and high-output all-solid-state lithium secondary batteries using lithium as an anode active material have been proposed.

Unfortunately, in these all-solid-state lithium secondary batteries, lithium that precipitates in an anode layer during charging dissolves into lithium ions during discharging, resulting in the formation of voids in the anode layer. Repeated charging and discharging raises concerns about potential damage to the anode layer, which could lead to a significant decrease in battery performance.

A proposed solid-state secondary battery involves adjusting the film strength of an anode active material layer to a range of about 50 megapascal (MPa) to about 250 MPa, allowing lithium to precipitate between an anode active material layer and an anode current collector during battery operation. In such a solid-state secondary battery, neither an end plate for applying external pressure during battery operation nor a pressurizing process in the battery manufacturing is necessary. As a result, the freedom of battery size and battery shape can be significantly enhanced, and the manufacturing cost can be reduced by omitting the pressurizing process.

### SUMMARY OF THE INVENTION

Provided is a solid-state secondary battery that can be produced without any external pressure or with minimal application of external pressure.

Provided is a method of preparing a solid electrolyte layer-anode layer composite.

Provided is a method of preparing the solid-state secondary battery.

Provided is a method of charging a solid-state secondary battery.

Additional aspects will be set forth in part in the description which follows and, in part, will be apparent from the description, or may be learned by practice of the presented embodiments of the disclosure.

According to an aspect, a solid-state secondary battery includes
a cathode layer containing lithium,
an anode layer containing lithium and silver, and a solid electrolyte layer disposed between the cathode layer and the anode layer,
wherein the anode layer includes a coating layer, a lithium alloy layer, and an anode current collector,
a bonding rate at the interface between the coating layer and the lithium alloy layer is about 85 percent (%) to about 100 %, and
the total number of moles of lithium included in the solid-state secondary battery is about 30 times to about 120 times greater than the total number of moles of silver included in the solid-state secondary battery.

The coating layer contains a binder, and the content of the binder may be about 1 weight percent (wt%) to about 5 wt% based on 100 wt% of the total weight of the coating layer.

An average thickness of the coating layer may be 4 micrometer (µm) or less.

The binder may be a water-based binder.

The binder may be polyacrylic acid, a water-soluble (meth)acrylic acid-(meth)acrylonitrile copolymer, or a combination thereof.

The solid electrolyte layer may contain an oxide-based solid electrolyte, a sulfide-based solid electrolyte, or a combination thereof. The cathode layer may contain a liquid electrolyte.

According to another aspect, a method of preparing a solid electrolyte layer-anode layer composite including a solid electrolyte layer and an anode layer, includes
a coating process of forming a coating layer by coating the solid electrolyte with an anode slurry, and
a current conduction process of precipitating a lithium alloy layer in the anode layer by laminating a lithium source on the opposite side of the solid electrolyte layer from the side where the coating layer is formed, and by conducting a current.

According to another aspect, a method of preparing a solid-state secondary battery includes further laminating a cathode layer onto the solid electrolyte layer-anode layer composite prepared by the method of preparing a solid electrolyte layer-anode layer composite,
wherein the lithium source is a different member from the cathode layer, and
the lithium source is removed after the current conduction process, and the cathode layer is laminated on the solid electrolyte layer.

According to another aspect, a method of preparing a solid-state secondary battery includes a coating process of forming a coating layer by coating a solid electrolyte layer with an anode slurry,
a process of forming an anode layer by arranging a lithium alloy layer and an anode current collector on top of the coating layer, and
a current conduction process of precipitating the lithium alloy layer in the anode layer by laminating the cathode layer on the opposite side of the solid electrolyte layer from the side where the coating layer is formed, and by conducting a current.

According to another aspect, a method of charging a solid-state secondary battery includes charging the solid-state secondary battery,
wherein the average thickness change of the lithium alloy layer during charging is from about 10 µm to about 60 µm.

### BRIEF DESCRIPTION OF THE DRAWINGS

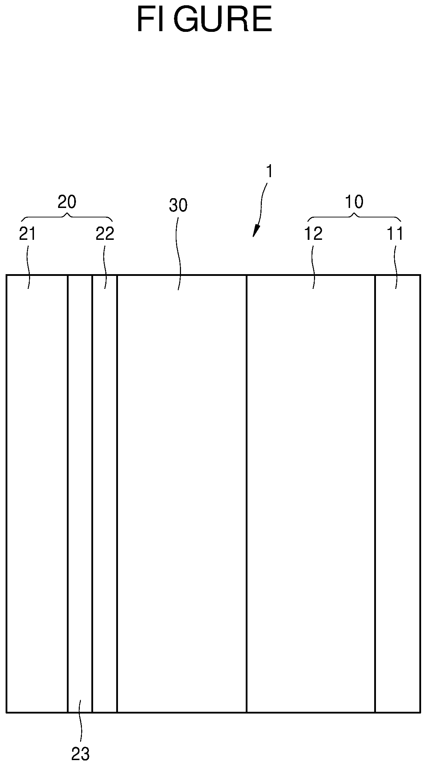

The above and other aspects, features, and advantages of certain embodiments of the disclosure will be more apparent from the following description taken in conjunction with the accompanying drawings, in which FIG. 1 is a cross-sectional representation schematically showing a structure of a solid-state secondary battery according to an embodiment.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects.

Hereinafter, a detailed description will be given of a preferred embodiment of the disclosure with reference to the attached drawings. In addition, components having substantially the same functional configuration in this specification and the drawings are given the same reference numerals to omit redundant description.

As used herein, the term "thickness" refers to "average thickness". And the average thickness may be evaluated by scanning electron microscope analysis.

Unless otherwise defined, all terms (including technical and scientific terms) as used herein have the same meaning as would be commonly understood by one of ordinary skill in the art to which the disclosure pertains. Additionally, terms defined in commonly used dictionaries should be interpreted as having a meaning consistent with their meaning within the context of the relevant art and the disclosure, and not in an idealized or overly formal sense.

Embodiments are described in the disclosure with reference to cross-sectional drawings which are schematic representation of an embodiment. Likewise, variations from the shapes shown in the diagrams are to be expected as a result of, for example, manufacturing techniques and/or tolerances. Therefore, the embodiments described in the disclosure should not be construed as being limited to the specific shapes of regions as illustrated in the disclosure, but should include, for example, deviations in shapes resulting from manufacturing. For example, regions depicted or described as flat may typically have rough and/or non-linear features. Moreover, sharply depicted angles may be rounded. Accordingly, the regions depicted in the drawings are inherently schematic, and their shapes are not intended to depict the precise shape of the regions nor to limit the scope of the claims.

The inventive concept may be embodied in many different forms and should not be construed as being limited to the embodiments described herein. The embodiments are provided so that the disclosure may be thorough and complete, and to fully convey the scope of the inventive concept to those skilled in the art. The same reference numerals refer to the same components.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. Therefore, reference to "an" element in a claim followed by reference to "the" element is inclusive of one element as well as a plurality of the elements.

The terms as used herein are for the purpose of illustrating specific embodiments only and are not intended to limit the inventive concept. The singular forms as used herein are intended to include the plural forms including "at least one," unless the context clearly indicates otherwise. "At least one" is not to be construed as limiting to the singular. As used herein, the term "and/or" includes any and all combinations of one or more of the associated listed items. The terms "comprises" and/or "comprising" as used in the detailed description specify the presence of stated features, regions, integers, steps, operations, components and/or ingredients, but do not preclude the presence or addition of one or more other features, regions, integers, steps, operations, components, ingredients and/or groups thereof.

Spatially relative terms, such as "beneath," "below," "lower," "above," "upper," and the like may be used herein for ease of description to describe the relationship of one component or feature to another component or feature. It should be understood that spatially relative terms are intended to encompass different orientations of the device when used or operated in addition to the direction depicted in the drawings. For example, if the device in the drawings is inverted, a component or feature described as being "beneath" or "below" other component or features would be oriented "above" the other components or features. Thus, the exemplary term "below" may encompass both the upward and downward directions. The device may be otherwise oriented (rotated 90 degrees or at other orientations), and the spatially relative terms as used herein may be interpreted accordingly.

The term "group" refers to a group in the periodic table of elements classified according to the International Union of Pure and Applied Chemistry ("IUPAC") group classification system (Groups 1-18).

In the disclosure, "particle size" or size refers to the average diameter if the particle is spherical, and refers to the average major axis length when the particle is non-spherical. Particle size or size may be measured using a particle size analyzer (PSA) or a scanning electron microscope. "Particle size" may refer to an average particle size. "Average particle size" may refer to a median particle diameter, D50.

D50 refers to the particle size that corresponds to the 50 % cumulative volume, which is calculated from the side of smaller particle size in a particle size distribution measured by laser diffraction method. D90 refers to the particle size that corresponds the 90 % cumulative volume, which is calculated from the side of smaller particle size in a particle size distribution measured by laser diffraction method. D10 refers to the particle size that corresponds to the 10 % cumulative volume, which is calculated from the side of smaller particle size in a particle size distribution measured by laser diffraction method.

As used herein, "metal" includes both metals and metalloids such as silicon and germanium, in either an elemental or ionic state. "Alloy" as used herein refers to a mixture (combination) of two or more metals.

As used herein, "electrode active material" refers to an electrode material capable of undergoing lithiation and delithiation. As used herein "cathode active material" refers to a cathode material capable of undergoing lithiation and delithiation, and "anode active material" refers to an anode material capable of undergoing lithiation and delithiation.

As used herein, "lithiation" and "to lithiate" refer to a process of adding lithium to an electrode active material, and "delithiation" and "to delithiate" refer to a process of removing lithium from an electrode active material.

As used herein, "charging" and "to charge" refer to a process of providing electrochemical energy to a battery, and "discharging" and "to discharge" refer to a process of removing electrochemical energy from a battery.

As used herein, "positive electrode" and "cathode" refer to the electrode where electrochemical reduction and lithiation occur during a discharge process, while "negative electrode" and "anode" refer to the electrode where electrochemical oxidation and delithiation occur during the discharge process.

The solid-state secondary battery includes a cathode layer containing lithium, an anode layer containing lithium and silver, and a solid electrolyte layer disposed between the cathode layer and the anode layer, wherein the anode layer includes a coating layer, a lithium alloy layer, and an anode current collector. A bonding rate at the interface between the coating layer and the lithium alloy layer may be about 85 % to about 100 %. The total number of moles of lithium included in the cathode layer and the anode layer may be about 30 times to about 120 times the total number of moles of silver included in the solid-state secondary battery.

The coating layer and the lithium alloy layer may be sequentially arranged on one side of the solid electrolyte layer, and the lithium source and the cathode layer may be arranged on the other side of the solid electrolyte layer. The current conduction process may involve the inclusion of lithium precipitated during the current conduction process in the lithium alloy layer, resulting in a well-bonded lithium alloy layer with the coating layer due to the formation of precipitated metallic lithium during the current conduction process. Consequently, the bonding rate at the interface between the electrode layer and the lithium alloy layer may range from about 85 % to about 100 %. Additionally, the total number of moles lithium included in the cathode layer and the anode layer is about 30 times to about 120 times greater than the total number of moles of silver included in the solid-state secondary battery.

The lithium content in the lithium alloy layer may be greater than the lithium content in a typical precipitated lithium layer.

Instead of arranging both a lithium source and a cathode layer on the other side of the solid electrolyte layer, it may also be possible to arrange only the cathode layer and perform the current conduction process. When only the cathode layer is used without a lithium source, the manufacturing process can be simplified and the manufacturing cost can be reduced compared to the process using a lithium source.

### 1. Structure of the Solid-State Secondary Battery according to an embodiment

In an embodiment, the solid-state secondary battery includes a cathode layer 10, an anode layer 20, and a solid electrolyte layer 30, as depicted in FIG. 1.

### 1-1. Cathode Layer

The cathode layer 10 may include a cathode current collector 11 and a cathode active material layer 12. The cathode current collector 11 may include a plate-shaped body or a foil-shaped body, each including or consisting of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may be omitted.

The cathode current collector 11 may include a base film and a metal layer. The metal layer may be applied to either one or both sides of the base film. The base film may include, for example, a polymer. Examples of the polymer may include polyethylene terephthalate (PET), polyethylene (PE), polypropylene (PP), polybutylene terephthalate (PBT), polyimide (PI), or a combination thereof. Examples of the metal layer may include In, Cu, Mg, stainless steel, Ti, Fe, Co, Ni, Zn, Al, Ge, Li, or alloys thereof. This structure of the cathode current collector can reduce the weight of the electrode, consequently improving the energy density of the lithium battery.

The cathode active material layer 12 may include a cathode active material and a solid electrolyte. In addition, the solid electrolyte included in the cathode layer 10 may be either the oxide-based or sulfide-based solid electrolyte, as described for the solid electrolyte layer 30. In other words, the sulfide-based solid electrolyte included in the cathode layer 10 may be the same as the sulfide-based solid electrolyte of the solid electrolyte layer 30.

The cathode active material may be any cathode active material capable of reversibly absorbing and releasing lithium ions.

The cathode active material may be formed using a lithium salt including lithium cobalt oxide (hereinafter referred to as LCO), lithium nickel oxide, lithium nickel cobalt oxide, lithium nickel cobalt aluminum oxide (hereinafter referred to as NCA), lithium nickel cobalt manganese oxide (hereinafter referred to as NCM), lithium manganate, and lithium iron phosphate; nickel sulfide; copper sulfide; lithium sulfide; sulfur; iron oxide; or vanadium oxide. These cathode active materials may be used alone, or in a combination of two or more.

In addition, the cathode active material may be formed by using a lithium salt of a transition metal oxide having a layered rock salt structure among the lithium salts described above. The "layered rock salt structure" refers to a structure in which oxygen atomic layers and metal atomic layers are arranged alternately and regularly along the <111> direction of a cubic rock salt structure, resulting in the formation of two-dimensional plane for each atomic layer. Furthermore, the "cubic rock salt structure" refers to a sodium chloride structure, which is a type of crystal structure, and specifically refers to a structure in which the face-centered cubic lattices formed by each cation and anion are arranged displaced from each other by half of the edges of the unit cell.

Examples of the lithium salt of transition metal oxide having such a layered rock salt structure include ternary transition metal oxide lithium salts such as LiNi_{xC}o_{yAlz02} (NCA) or LiNiₓCo_{y}Mn_{z}O₂ (NCM) (where 0<x<1, 0<y<1, 0<z<1, and x+y+z=1).

When the cathode active material includes the ternary transition metal oxide lithium salts having the layered rock salt structure, the energy density and thermal stability of the solid-state secondary battery 1 can be improved.

The cathode active material may be covered by a coating layer. In an embodiment, the coating layer of an embodiment may be any type of coating layer known for a cathode active material in a solid-state secondary battery. An example of the coating layer may include a combination of lithium oxide and zirconium dioxide (Li₂O-ZrO₂).

In addition, when the cathode active material is formed of ternary transition metal oxide lithium salts such as NCA or NCM, and includes nickel (Ni) as the cathode active material, the capacity density of the solid-state secondary battery 1 can be increased, thereby reducing metal dissolution from the cathode active material in the charged state. Accordingly, the solid-state secondary battery 1 in an embodiment can have improved long-term reliability and cycle characteristics.

Examples of the shape of the cathode active material may include a spherical particle shape and an elliptical particle shape. In addition, the particle size of the cathode active material is not particularly limited and may be within a range applicable to cathode active materials of conventional solid-state secondary batteries. In addition, the content of the cathode active material in the cathode layer 10 is not particularly limited, and may be within a range applicable to the cathode layer of a conventional solid-state secondary batteries.

Furthermore, in addition to the cathode active material and the solid electrolyte, additives such as a conductive agent, a binder, a filler, a dispersant, and an ionic conductive agent may be appropriately blended in the cathode layer 10.

Examples of the conductive additives that may be blended into the cathode layer 10 may include graphite, carbon black, acetylene black, Ketjen black, carbon fiber, and metal powder. In addition, examples of binders that may be blended into the cathode layer 10 may include styrene butadiene rubber (SBR), polytetrafluoroethylene, polyvinylidene fluoride, and polyethylene. Furthermore, as fillers, dispersants, ion-conductive agents, or the like that can be blended into the cathode layer 10, known materials generally used in electrodes of solid-state secondary batteries may be used.

The cathode layer 10 may additionally include a liquid electrolyte in addition to the aforementioned components. Specific examples of the cathode layer 10 containing a liquid electrolyte may include one in which the cathode active material layer 12 is impregnated with the liquid electrolyte.

The liquid electrolyte may include a lithium salt and at least one of an ionic liquid and a polymeric ionic liquid. The liquid electrolyte may be non-volatile.

An ionic liquid refers to a salt that is liquid at room temperature (25 °C) or a room-temperature molten salt that has a melting point at or below room temperature and is composed solely of ions.

The ionic liquid may be a compound including A) one or more cations of ammoniums, pyrrolidiniums, pyridiniums, pyrimidiniums, imidazoliums, piperidiniums, pyrazoliums, oxazoliums, pyridaziniums, phosphoniums, sulfoniums, triazoliums, or a combination thereof, and B) one or more anions of BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄⁻, CF₃SO₃⁻, (FSO₂)₂N⁻, (C₂F₅SO₂)₂N⁻, (C₂F₅SO₂)(CF₃SO₂)N⁻, (CF₃SO₂)₂N⁻, or a combination thereof.

Examples of ionic liquids may include N-methyl-N-propylpyrrolidium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)imide, 1-ethyl-3-methylimidazolium bis(trifluoromethylsulfonyl)imide, or a combination thereof.

The polymeric ionic liquid may include repeating units including A) one or more cations of ammoniums, pyrrolidiniums, pyridiniums, pyrimidiniums, imidazoliums, piperidiniums, pyrazoliums, oxazoliums, pyridaziniums, phosphoniums, sulfoniums, triazoliums or a combination thereof, and B) one or more anions of BF₄⁻, PF₆⁻, AsF₆⁻, SbF₆⁻, AlCl₄₋, HSO₄⁻, ClO₄⁻, CH₃SO₃⁻, CF₃CO₂⁻, (CF₃SO₂)₂N⁻, (FSO₂)₂N⁻, Cl⁻, Br⁻, I⁻, SO₄⁻, CF₃SO₃⁻, (C₂F₅SO₂)₂N⁻, (C₂F₅SO₂)(CF₃SO₂)N⁻, NO₃⁻, Al₂Cl₇⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, (O(CF₃)₂C₂(CF₃)₂O)₂PO⁻, or a combination thereof.

The lithium salt may be any lithium salt used in the art. Examples of the lithium salt may include one of LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CxF₂ₓ₊₁SO₂)(CyF_{2y+1}SO₂) (where x and y are natural numbers), LiCl, Lil, or a combination thereof.

The concentration of lithium salt, ionic liquid and polymeric ionic liquid contained in the liquid electrolyte may be about 0.1 molar (M) to about 5 M.

The content of the liquid electrolyte impregnated into the cathode active material layer 12 may be about 0 parts by weight to about 100 parts by weight, about 0 parts by weight to about 50 parts by weight, about 0 parts by weight to about 30 parts by weight, about 0 parts by weight to about 20 parts by weight, about 0 parts by weight to about 10 parts by weight, about 0 parts by weight to about 5 parts by weight, or about 0.1 parts by weight to about 5 parts by weight, based on 100 parts by weight of the total weight of the cathode active material layer 12 without the liquid electrolyte.

The thickness of the cathode layer may be about 5 µm to about 150 µm, and after pressurization, about 1 µm to about 50 µm.

### 1-2. Solid Electrolyte Layer

The solid electrolyte layer 30 may be disposed between the cathode layer 10 and the anode layer 20 and include a solid electrolyte.

Examples of the solid electrolyte may include a sulfide-based solid electrolyte, an oxide-based solid electrolyte, or a combination thereof.

Examples of the sulfide-based solid electrolyte material may include one or more of Li₂S-P₂S₅, Li₂S-P₂S₅-LiX (where X is a halogen element, such as I or Cl), Li₂S-P₂S₅-Li₂O, Li₂S-P₂S₆-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-Lil, Li₂S-SiS₂-P₂S₅-LiI, Li₂S-B₂S₃, Li₂S-P₂S₅-ZₘSₙ (where m and n are positive numbers, and Z is any one of Ge, Zn, or Ga), Li₂S-GeS₂, Li₂S-SiS₂-Li₃PO₄, Li₂S-SiS₂-LiₚMO_{q} (where p and q are positive numbers, and M is any one of P, Si, Ge, B, Al, Ga or In), Li₇₋ₓPS₆₋ₓClₓ (0≤x≤2), Li₇₋ₓPS₆₋ₓBrₓ (0≤x≤2), Li₇₋ₓPS₆₋ₓIₓ (0≤x≤2) or LiₐPS_{b}(Cl)_{d} (5≤a < 7, 4≤b≤6, 0<d≤2).

The sulfide-based solid electrolyte may be an argyrodite-type compound including one or more of Li₆PS₆Cl, Li₆PS₅Br, Li₆PS₅I, LiₐPS_{b}(Cl)_{d} (5≤a < 7, 4≤b≤6, 0<d≤2), or a combination thereof.

Examples of the oxide-based solid electrolyte may include garnet-type composite oxides, perovskite-type oxides, LISICON-type composite oxides, NASICON-type composite oxides, Li-alumina-type composite oxides, LiPON, oxide glass, or a combination thereof. Among these oxide-based solid electrolytes, an oxide-based solid electrolyte that may be stably used with lithium metal may be selected.

Examples of the oxide-based solid electrolyte may include Li_{1+x+y}AlₓTi₂₋ₓSi_{y}P₃-_{y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), Pb(Mg_{1/3}Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂ (0≤x≤1, 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₆-TiO₂-GeO₂, Li₃₊ₓLa₃M₂O₁₂ (M = Te, Nb, or Zr, 0≤x≤10), or a combination thereof. The oxide-based solid electrolyte may be prepared by sintering methods.

The garnet-type solid electrolyte may be an oxide represented by the following Formula 3.

Formula 3 Li₃₊ₓLa₃Zr₂₋ₐMₐO12

In Formula 3, M may be Al, Ga, In, Si, Ge, Sn, Sb, Bi, Sc, Y, Ti, Hf, V, Nb, Ta, W, or a combination thereof, x may be a number from 1 to 10, and 0≤a<2.

The oxide-based solid electrolyte may be a garnet-type solid electrolyte of Li₇La₃Zr₂O₁₂ (LLZO) Li₃₊ₓLa₃Zr₂₋ₐMₐO₁₂ (M-doped LLZO, where M = Ga, W, Nb, Ta, or Al, 0<a<2, 0≤x≤10), or a combination thereof.

Examples of the oxide-based solid electrolyte may include Li_{1.3}Al_{0.3}Ti_{1.7}(PO₄)₃, Li_{0.34}La_{0.51}TiO_{2.94}, Li_{1.07}Al_{0.69}Ti_{1.46}(PO₄)₃, 50Li₄SiO₄-50Li₃BO₃, 90Li₃BO₃-10Li₂SO₄, Li_{2.9}PO_{3.3}N_{0.46}, Li₇La₃Zr₂O₁₂, Li_{3.6}Si_{6.6}P_{6.4}O₄, Li_{1.5}Al_{0.5}Ge_{1.5}(PO₄)₃, or a combination thereof.

The solid electrolyte layer 30 may additionally contain a binder.

Examples of the binder may include styrene butadiene rubber (SBR), polytetrafluoroethylene, polyvinylidene fluoride, polyethylene, or a combination thereof. A binder may be used in in the solid electrolyte layer 30, which can be the same as or different from the binder in the cathode active material layer 12 and the anode layer.

In an embodiment, the solid electrolyte layer 30 may contain only the oxide-based solid electrolyte aforementioned as a solid electrolyte. The solid electrolyte layer 30 may consist of an oxide-based solid electrolyte.

The solid electrolyte layer 30 may contain a sulfide-based solid electrolyte, or a combination of a sulfide-based solid electrolyte and an oxide-based solid electrolyte.

The sulfide-based solid electrolyte may include Li, S, and P, and may optionally further include a halogen element. The sulfide-based solid electrolyte may be selected from the sulfide-based solid electrolytes used in the solid electrolyte layer. The sulfide-based solid electrolytes may have an ionic conductivity of 1X10⁻⁵ S/cm or more at room temperature (25 °C). Examples of the sulfide-based solid electrolytes may include one or more of Li₃PO₄-Li₂SO₄, Li₂S-P₂S₅, Li₂S-P₂S₅-LiX (where X is a halogen element), Li₂S-P₂S₅-Li₂O, Li₂S-P₂S₆-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₆-LiI, Li₂S-B₂S₃, Li₂S-P₂S₅-ZₘSₙ, (where m and n are each positive numbers, and Z is one of Ge, Zn, or Ga), Li₂S-GeS₂, Li₂S-SiS₂-Li₃PO₄, Li₂S-SiS₂-LiₚMO_{q} (where p, q are positive numbers, and M is one of P, Si, Ge, B, Al, Ga or In), Li₇₋ₓPS₆₋ₓClₓ (0≤x≤2), Li₇₋ₓPS₆₋ₓBrₓ (0<x≤2), or Li₇₋ₓPS₆₋ₓIₓ (0<x≤2). 1-3. Anode Layer

The anode layer 20 may include an anode current collector 21 and an anode active material layer stacked on the anode current collector 21.

The anode current collector 21 may be composed of a material that does not react with lithium, i.e., does not form an alloy or a compound. Examples of materials that can constitute the anode current collector 21 may include copper (Cu), stainless steel, titanium (Ti), iron (Fe), cobalt (Co), nickel (Ni), or a combination thereof. The anode current collector 21 may contain any one of these metals, or be composed of an alloy or clad material of two or more metals. The anode current collector 21 may be plate-shaped or thin-walled.

The anode current collector 21 may include a base film and a metal layer disposed on one or both sides of the base film. The base film may include a polymer. The polymer may be a thermoplastic polymer. Examples of the polymer include polyethylene terephthalate (PET), polyethylene (PE), polypropylene (PP), polybutylene terephthalate (PBT), polyimide (PI), or a combination thereof. The polymer may be an insulating polymer. If the base film includes an insulating thermoplastic polymer, the base film may soften or liquefy in the event of a short circuit, resulting in the shutdown of battery operation and the prevention of a sudden increase in current. The metal layer may include copper (Cu), stainless steel, titanium (Ti), iron (Fe), cobalt (Co), nickel (Ni) or alloys thereof. The anode collector 21 may additionally include a metal chip and/or a lead tab. More specific details about the metal chips, and lead tabs of the anode current collector 21 may be referred from the aforementioned description of the cathode current collector 11. This design of the anode current collector 21 can reduce the weight of the anode 20, resulting in an increase of the energy density of the anode 20 and the all-solid-state secondary battery.

In an embodiment, the anode active material layer may include a coating layer 22 and a lithium alloy layer 23.

The coating layer 22 may include an anode active material, a carbon material, and a binder. The anode active material may include an alloy-forming element, which forms an alloy or a compound with lithium through an electrochemical reaction during charging.

Examples of the alloy-forming element may include one or more of gold, platinum, palladium, silicon, silver, aluminum, bismuth, tin, or zinc.

When one or more of gold, platinum, palladium, silicon, silver, aluminum, bismuth, tin and zinc are used as the alloy-forming element, the anode active material may be in the form of particles, with a particle size is 4 µm (4,000 nm) or less, for example, 300 nm (0.3 um) or less, or about 100 nm to about 300 nm. In this case, the characteristics of the solid-state secondary battery 1 can further be improved. The particle size of the anode active material may be a median diameter (i.e., D₅₀), which is measured using a laser particle size distribution meter.

Examples of the carbon material may include carbon black, graphene, carbon nanotubes, carbon nanofibers, or a combination thereof. Examples of carbon black may include acetylene black, furnace black, ketjen black, or a combination thereof.

A water-based binder that does not react with an anode active material or a solid electrolyte and is dispersible in an aqueous solvent may be used among a binder that is commonly used in a solid-state secondary battery.

Specific examples of the water-based binder include a water-soluble (meth)acrylic acid-(meth)acrylonitrile copolymer.

The water-soluble (meth)acrylic acid-(meth)acrylonitrile copolymer may contain a water-soluble copolymer A including units derived from (meth)acrylic acid monomers and units derived from (meth)acrylonitrile monomers, and a water-soluble copolymer B including units derived from monomers represented by the following Formula 1.

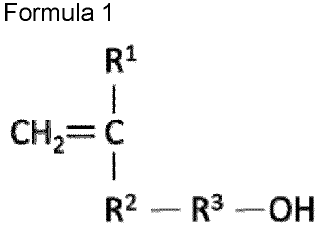

In Formula 1, R¹ may be a hydrogen atom or a methyl group,
R² may be a -C(=O)-O- group or a -C(=O)-NH- group, and
R³ may be an alkylene group having 1 to 4 carbon atoms or a functional group represented by the following Formula 2,

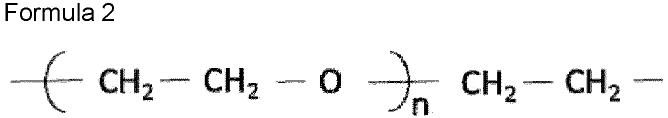

In Formula 2, n may be an integer greater than or equal to 1, an integer from 1 to 10, an integer from 1 to 8, or an integer from 1 to 5.

Examples of alkylene groups having 1 to 4 carbon atoms may include a methyl group, an ethylene group, a propylene group, a butylene group, or a pentylene group.

The water-soluble (meth)acrylic acid-(meth)acrylonitrile copolymer may contain about 40 wt% to about 70 wt%, about 42 wt% to about 68 wt%, for example, about 45 wt% to about 65 wt% of units derived from (meth)acrylic acid monomers.

Examples of the water-soluble (meth)acrylic acid-(meth)acrylonitrile copolymer may include a copolymer including about 40 wt% to about 70 wt% of (meth)acrylic acid monomers, about 30 wt% to about 60 wt% of (meth)acrylonitrile monomers, and about 0 wt% to about 30 wt% of other monomers copolymerizable with (meth)acrylic acid monomers and (meth)acrylonitrile.

The content of (meth)acrylonitrile monomers may be about 35 wt% to about 55 wt%, about 38 wt% to about 55 wt%, or about 40 wt% to about 55 wt%.

When the content of structural units derived from (meth)acrylic acid monomers in the water-soluble (meth)acrylic acid-(meth)acrylonitrile copolymer is 40 wt% or more, the water-soluble copolymer A becomes easily soluble in water, resulting in an enhancement of the dispersibility of the anode active material and the storage stability of the slurry. In addition, when the content of structural units derived from (meth)acrylic acid monomers in the water-soluble (meth)acrylic acid-(meth)acrylonitrile copolymer is 70 wt% or less, the occurrence of cracks in the coating layer 22 during the slurry coating and drying process can be further suppressed.

When the content of structural units derived from (meth)acrylonitrile in the water-soluble (meth)acrylic acid-(meth)acrylonitrile copolymer is 30 wt% or more, the adhesion of the coating layer 22 to the solid electrolyte layer 30 can be further improved. In addition, when the content of structural units derived from (meth)acrylonitrile in the water-soluble (meth)acrylic acid-(meth)acrylonitrile copolymer is 60 wt% or less, the water-soluble (meth)acrylic acid-(meth)acrylonitrile copolymer may exhibit increased solubility in water, facilitating the enhancement of the dispersibility of the anode active material and the storage stability of the slurry.

When the content of structural units derived from other monomers copolymerizable with the (meth)acrylic acid monomers and (meth)acrylonitrile in the water-soluble (meth)acrylic acid-(meth)acrylonitrile copolymer is 30 wt% or less, electrode expansion of the anode layer 20 can be further suppressed.

The (meth)acrylic acid monomers may contain at least one of (meth)acrylic acid, metal salts of (meth)acrylic acid, ammonium salts of (meth)acrylic acid, or amine salts of (meth)acrylic acid.

Examples of metal salts of (meth)acrylic acid and amine salts of (meth)acrylic acid may include alkali metal salts of (meth)acrylic acid. Specific examples of the metal salts of (meth)acrylic acid may include sodium acrylate, lithium acrylate, potassium acrylate, calcium acrylate, magnesium acrylate, sodium methacrylate, lithium methacrylate, potassium methacrylate, calcium methacrylate, magnesium methacrylate, or a combination thereof. Among these, sodium acrylate may be used.

Examples of ammonium salts of (meth)acrylic acid may include ammonia neutralization salts of (meth)acrylic acid, monoethanolamine neutralization salts, diethanolamine neutralization salts, hydroxylamine neutralization salts, or a combination thereof. Among these, ammonia neutralization salts of (meth)acrylic acid may be used.

The viscosity of an aqueous solution of water-soluble (meth)acrylic acid-(meth)acrylonitrile copolymer at 25 °C may be in a range from about 500 millipascal-second (mPa·s) to about 5000 mPa·s. The solid content of the water-soluble (meth)acrylic acid-(meth)acrylonitrile copolymer in the aqueous solution may be about 5 wt% to about 10 wt%, or 8 wt%. When the viscosity of the aqueous solution is 500 mPa·s or more, the coating layer 22 can exhibit good adhesion to the solid electrolyte layer 30. In addition, when the viscosity of the aqueous solution is 5000 mPa·s or less, the anode active material may have greater or uniform dispersity facilitating the production of an anode layer 20 with excellent cycle characteristics.

Examples of the binder may include styrene butadiene rubber (SBR), polytetrafluoroethylene, polyvinylidene fluoride, polyethylene, or a combination thereof.

The content of the anode active material may be about 50 wt% to about 70 wt%, about 52 wt% to about 68 wt%, about 53 wt% to about 67 wt%, or about 55 wt% to about 65 wt% based on 100 wt% of the total weight of the coating layer 22. When the content of the anode active material is within the above range, a solid-state secondary battery with excellent cycle characteristics can be produced.

The content of the carbon material may be in a range from about 30 wt% to about 50 wt%, about 32 wt% to about 48 wt%, or about 35 wt% to about 45 wt% based on 100 wt% of the total weight of the coating layer 22. When the content of the carbon material is within the above range, a solid-state secondary battery with excellent cycle characteristics can be produced.

The content of the binder may be in a range from about 1 wt% to about 5 wt%, about 1 wt% to about 4.5 wt%, or about 1 wt% to about 4 wt% based on 100 wt% of the total weight of the coating layer 22. When the binder content is 1 wt% or higher, the film strength of the coating layer 22 can be adjusted to a suitable range in order to minimize the formation of voids caused by the precipitation of metallic lithium in the coating layer 22 or between the solid electrolyte layer 30 and the coating layer 2.

The coating layer may contain a plurality of pores, and the porosity of the coating layer is 70 % or more, about 70 % to about 95 %, about 70 % to about 93 %, about 70 % to about 92 %, about 70 % to about 90 %, about 70 % to about 88 %, or about 70 % to about 85 %. When the porosity of the coating layer is within the range, a solid-state secondary battery having excellent cycle characteristics can be produced.

The porosity of the coating layer may be evaluated using scanning electron microscope analysis. In addition, the porosity of the coating layer may refer to the porosity after the battery has been fully assembled without pressurization and after a single charge cycle.

The porosity of the coating layer may also be calculated using the true density of the coating layer and the density of the coating layer. Porosity (%) = {(True density of coating layer - density of coating layer) / True density of coating layer} x 100

In addition to the above, additives used in conventional solid-state secondary batteries, such as fillers, dispersants, ion conductive agents, solid electrolytes, or a combination thereof, may be appropriately mixed in the coating layer 22.

The thickness of the coating layer 22 may be 4 µm or less, about 0.1 µm to about 4 µm, about 0.3 µm to about 4 µm, about 0.5 µm to about 4 µm, about 1.0 µm to about 4 µm, about 1.0 µm to about 3.5 µm, about 1.0 µm to about 3.0 µm, or about 1.5 µm to about 2.5 µm. By setting the thickness of the coating layer 22 to be 4 µm or less, the lithium alloy layer 23 can be adequately protected by the coating layer 22, while minimizing the occurrence of the precipitation of metallic lithium in the coating layer 22. The thickness of the coating layer 22 can be determined by examining the average thickness of the coating layer 22 in the cross-section of the all-solid-state secondary battery using a scanning electron microscope (SEM).

The lithium alloy layer 23 may be a layer positioned between the coating layer 22 and the anode current collector. This lithium alloy layer 23 may include an alloy of metallic lithium and silver, and additionally include metallic lithium that has precipitated as a result of the current conduction process described below. In addition, this lithium alloy layer 23 is adhered to the coating layer 22 through the formation of metallic lithium during the current conduction process.

The total number of moles of lithium contained in the cathode layer and the anode layer including lithium contained in the lithium alloy layer 23 is set to be about 30 times to about 120 times greater than the total number of moles of silver contained in the cathode layer and the anode layer.

The total number of moles of lithium contained in the cathode layer and the anode layer, including lithium contained in the lithium alloy layer 23 may be about 30 times to about 110 times, about 30 times to about 100 times, about 0 times to about 90 times, about 30 times to about 80 times, about 30 times to about 70 times, about 30 times to about 60 times, or about 30 times to about 50 times greater than the total number of moles of silver contained in the cathode layer and the anode layer.

In the disclosure, the total number of moles of lithium and the total number of moles of silver can be confirmed by composition analysis using Scanning Electron Microscope-Energy Dispersive X-ray Spectroscopy (SEM-EDX) or inductively coupled plasma (ICP).

The lithium alloy layer may include an alloy of metallic lithium and silver.

In an embodiment, the interfacial bonding rate between the coating layer 22 and the lithium alloy layer 23 may be about 85 % to about 100 %, about 85 % to about 99 %, about 90 % to about 99 %, about 95 % to about 99 %, or about 96 % to about 99 %. The interfacial bonding rate may be achieved by forming a favorable bonding interface between the coating layer 22 and the lithium alloy layer 23 using the current conduction process described below. Furthermore, bonding refers to a state in which the interface between the coating layer 22 and the lithium alloy layer is in direct physical contact, and the bonding rate can be determined by the following method.

First, a scanning electron microscope (SEM) image with a magnification of 1,000 times can be obtained of an arbitrary portion of the cross-section of a solid-state secondary battery 100, which includes the bonding interface between the coating layer 22 and the lithium alloy layer 23. Next, the ratio of bonded portions to the total length of the bonding interface depicted in the image (i.e., the bonding rate) may be determined. This operation can be conducted at five distinct sites within the same solid-state secondary battery 100, and the average of the bonding rate for each site is calculated to determine the bonding rate between the coating layer 22 and the lithium alloy layer 23 in the solid-state secondary battery 100. Furthermore, the bonding rate can be calculated using the method described herein in the examples and comparative examples provided. The bonding rate can potentially reach nearly 100 % through the current conduction process described below, with values ranging from about 90 % to about 100 %, about 93 % to about 100 %, about 95 % to about 100 %, or about 97 % to about 100 %.

The thickness of the lithium alloy layer may be 1 um or less, about 1 nm to about 800 nm, about 5 nm to about 750 nm, about 10 nm to about 700 nm, about 30 nm to about 650 nm, about 50 nm to about 600 nm, or about 100 nm to about 500 nm. When the thickness of the lithium alloy layer is within the range, a solid-state secondary battery having excellent cycle characteristics and energy density can be manufactured.

The lithium alloy layer may be disposed on the anode current collector using, for example, a vacuum deposition method, a sputtering method, a plating method, or the like, but is not necessarily limited to these methods, and any method capable of forming a lithium alloy layer in the relevant technical field may be used.

### 2. Manufacturing method of solid-state secondary battery according to an embodiment

A method of manufacturing a solid-state secondary battery 1 according to an embodiment will be described. The solid-state secondary battery 1 according to an embodiment may form an anode layer 20 on a solid electrolyte layer 30.

Separately, a cathode layer 10 may be prepared, and the solid electrolyte layer 30 may be laminated between the cathode layer 10 and the anode layer 20 to manufacture a solid-state secondary battery.

### 2-1. Solid electrolyte layer manufacturing process

The solid electrolyte layer 30 can be manufactured by the following methods or processes.

The manufacturing processes for the solid electrolyte layer 30 may involve a blending process, in which raw materials are mixed to create a blended material, and a sintering process, in which the obtained blended material is sintered. As an example, a method of manufacturing a solid electrolyte layer 30 using a sintered body of a garnet-type oxide is described.

In the blending process, a material containing at least Li, La, and Zr components may be blended as a raw material to obtain a blended material.

Each component contained in the blended material may be in a component ratio that can yield a lithium-ion conductive ceramic material having a garnet-type crystal structure or a crystal structure similar to a garnet-type crystal structure.

A sintering agent such as boron oxide may be added to this blended material and mixed in using a ball mill or jet mill to obtain a precursor powder.

The precursor powder obtained in this manner may be placed into a mold or the like and pressurized to obtain a precursor pellet.

In the subsequent sintering process, the precursor pellet, molded as described above, may be heated at a temperature of about 900 °C to about 1250 °C for about 1 hour to about 36 hours to obtain a solid electrolyte layer 30. The sintering temperature and sintering time may be adjusted accordingly based on the mixing ratio of materials and other factors.

The temperature may be about 950 °C to about 1250 °C, about 980 °C to about 1200 °C, or about 1000 °C to about 1200 °C.

The heating method is not particularly limited, and resistance heating or microwave heating may be used. The sintering process may be divided into two stages of preliminary sintering and main sintering, or the aforementioned molding process may be included in the sintering process to employ a current-assisted sintering method or a discharge plasma sintering method.

Furthermore, the surface roughness of the solid electrolyte layer 30 after sintering may be adjusted through polishing or acid treatment. The surface roughness may be controlled by the polishing conditions or the intensity of the acid treatment, and the intensity of the acid treatment may be controlled by, for example, the concentration of the acid used, the treatment time, or the treatment temperature.

### 2-2. Anode layer manufacturing process

A slurry may be prepared by adding materials constituting the coating layer 22 (anode active material, carbon material, binder, etc.) to a polar or nonpolar solvent. The coating layer may be also referred to as a coating film.

The prepared slurry may be applied to a side of the solid electrolyte layer 30 manufactured as described above and dried to form the coating layer 22. The coating layer 22 may be formed by coating the side of the solid electrolyte layer 30 with the slurry, as described herein, and may not be pressure-molded.

Next, an Ag-Li alloy layer and a Cu layer, serving as the anode current collector, may be laminated on the coating layer 22 to form an Ag-Li/Cu laminate. The Ag-Li alloy layer may be laminated in direct contact with the coating layer 22. Lastly, a lithium source may be applied to the side that is opposite the side of the solid electrolyte layer 30, which is in contact with the coating layer 22, and current conduction may be performed. Through the current conduction process, Ag-Li may be precipitated between the Ag-Li alloy layer and the coating layer 22 to form a bonding interface, and a lithium alloy layer 23 may be formed between the coating layer 22 and the anode current collector 21, resulting in the production of a solid electrolyte layer-anode layer composite in which the anode layer 20 is laminated onto the solid electrolyte layer 30.

The lithium source used in the current conduction process may be any material capable of supplying lithium, and while it is possible to use the cathode layer 10, in an embodiment, a lithium source separate from the cathode layer 10 (e.g., plate-shaped metal lithium) may be used.

The thickness of the metallic lithium may be about 1 µm to about 20 µm, or about 5 µm to about 15 µm, or about 8 µm to about 12 µm.

The current conduction process can form a dense lithium alloy layer 23 by performing the process for an extend time with a low current density. The current conduction conditions in the current conduction process may be adjusted by applying a current ranging from about 10 microamperes per square centimeter (µA/cm²) to about 200 µA/cm², and adjusting the conduction time to control the capacity of the lithium alloy layer 23 formed in the anode layer. The current in the current conduction process may be about 13 µA/cm² to about 180 µA/cm², or about 30 µA/cm² to about 160 µA/cm². The current conduction time may be about 1 hour to about 150 hours, about 3 hours to about 120 hours, or about 4 hours to about 112 hours. The thickness of the metallic lithium precipitated on the layer during the current conduction process may be about 0.5 µm to about 20 µm, about 1.0 µm to about 15 µm, or about 1.0 µm to about 13 µm. The change in the thickness of the lithium alloy layer in this current conduction process may be measured by examining the average thickness of the lithium alloy layer in the cross-section of the all-solid-state secondary battery using a scanning electron microscope (SEM).

### 2-3. Cathode layer manufacturing process

The cathode layer 10 may be manufactured by mixing the materials that constitute the cathode active material layer 12 (cathode active material, binder, etc.), stacking the mixed materials on the cathode current collector 11 to obtain a laminate, and pressurizing the obtained laminate (for example, performing a pressurization using hydrostatic pressure). This pressurizing process may be omitted. The cathode layer 10 may be manufactured by compacting and forming the mixture of materials constituting the cathode active material layer 12 into a pellet shape or stretching it into a sheet shape. When the cathode layer 10 is manufactured using these methods, the cathode current collector 11 may be pressed against the pellet or sheet. Alternatively, the cathode active material layer 12 may be formed by applying the slurry, made by adding the materials constituting the cathode active material layer to a non-polar solvent, onto the cathode current collector 11 and drying the slurry. A paste may be used instead of slurry.

In an embodiment, an ionic liquid electrolyte may be impregnated into the cathode active material layer 12 formed in this manner.

The cathode current collector 11 may be, for example, a plate or foil containing In, Cu, Mg, stainless steel, Ti, Fe, Co, Ni, Zn, Al, Ge, Li, or an alloy thereof.

### 2-4. Solid-state secondary battery assembly process

A solid-state secondary battery 1 of an embodiment may be manufactured by laminating the cathode layer 10 onto the composite of the solid electrolyte layer 30 and the anode layer 20 produced by the method, with the solid electrolyte layer 30 interposed between the cathode layer 10 and anode layer 20. Pressurization may be applied, if necessary, but this pressurization process may be omitted. For example, in an embodiment, since the cathode active material layer 12 is impregnated with an ionic liquid electrolyte, the side of the cathode active material layer 12 is adhesive, and the cathode layer 10 may be laminated on the side of the solid electrolyte layer 30 simply by lightly pressing it while placed on the side of the solid electrolyte layer 30.

The solid-state secondary battery according to an embodiment may achieve an improved critical current density without undergoing a pressurizing process and may be charged with a high current, facilitating rapid charging. The critical current density (CCD) of the solid-state secondary battery is 3 milliampere per square centimeter (mA/cm²) or greater, for example, about 3 mA/cm² to about 4.5 mA/cm².

In an embodiment, the solid-state secondary battery may be manufactured through the following processes: forming a coating layer by applying an anode slurry to the solid electrolyte layer; forming a lithium alloy layer and an anode current collector on the coating layer to form an anode layer; and using a current conduction process in which, after laminating the cathode layer onto the side of the solid electrolyte layer opposite to the side where the coating layer is formed, lithium alloy is precipitated in the anode layer. According to this manufacturing method, the cathode layer may serve as a lithium source.

The above-described manufacturing method uses the cathode layer as a lithium source.

### 3. Charging method of solid-state secondary battery

When operating the solid-state secondary battery 1 manufactured by the method, the operation may be performed with or without the application of pressure to the solid-state secondary battery.

When pressure is applied, the pressure may be about 0.01 MPa to about 10 MPa, about 0.01 MPa to about 1 MPa, or about 0.05 MPa to about 0.3 MPa. In addition, the pressure may be applied by methods such as sandwiching the solid-state secondary battery 1 between two hard plates made of stainless steel, brass (or bronze), aluminum, glass or the like, and tightening the two plates with screws.

In addition, the temperature at which the solid-state secondary battery 1 of an embodiment is operated is not particularly limited, but may be about 15 °C to about 70 °C, about 15 °C to about 60 °C, about 15 °C to about 50 °C, or room temperature, which is about 20 °C to about 30 °C.

In an embodiment, since a lithium alloy layer 23 is present in the anode layer 20, lithium ions migrating from the cathode layer 10 may be precipitated in the lithium alloy layer 23 of the anode layer 20. A solid-state secondary battery in which lithium is precipitated on the anode during charging to form a lithium alloy layer 23 is referred to as a "precipitation-type solid-state secondary battery."

Since lithium precipitated on the anode layer 20 during charging moves to the cathode layer 10 during discharging, the thickness of the lithium alloy layer 23 in the anode layer 20 changes depending on charging and discharging. The degree of change in the thickness of the lithium alloy layer 23, that is, the difference between the thickness of the lithium alloy layer 23 after charging and the thickness of the lithium alloy layer 23 before charging, may be about 10 µm to about 60 µm, about 15 µm to about 60 µm, about 15 µm to about 58 µm, about 20 µm to about 57 µm, about 20 µm to about 55 µm, about 25 µm to about 55 µm, or about 30 µm to about 55 µm. The thickness of the lithium alloy layer may be measured by examining the average thickness of the lithium alloy layer on the cross-section of an all-solid-state secondary battery before and after charging using a scanning electron microscope (SEM).

As described above, as the thickness of the lithium alloy layer 23 changes depending on charging and discharging, in an embodiment, the charge capacity of the cathode active material layer 12 may directly affect the change in the thickness of the lithium alloy layer 23. In an embodiment, the charge capacity of the cathode active material layer 12 may be about 2 milliampere hours per square centimeter (mAh/cm²) to about12 mAh/cm².

Here, the charge capacity of the cathode active material layer 12 may be obtained by multiplying the charge capacity density (milliampere hours per gram (mAh/g)) of the cathode active material by the weight of the cathode active material in the cathode active material layer 12. When multiple types of cathode active materials are used, the value of charge capacity density X weight is calculated for each cathode active material, and the sum of these values is used as the charge capacity of the cathode active material layer 12.

Several methods can be used to directly measure the charging capacity, such as measuring the charge capacity of the cathode active material layer 12 by constructing a test cell with the cathode active material layer 12 as the working electrode and Li as the counter electrode, and performing CC-CV charging from OCV (open circuit voltage) to the upper limit charge voltage. The upper charge voltage is defined by JIS C 8712:2015, which specifies 4.25 volt (V) for lithium cobalt oxide cathodes. For other types of cathodes, the voltage is determined according to the provision of JIS C 8712:2015 A.3.2.3 (Safety requirements for applying different upper charge voltages).

The test cell may be manufactured by the following method. The cathode active material layer 12 that is used for measuring the charging capacity is formed into a circular shape with a diameter of 13 millimeter (mm). 200 gram (g) of solid electrolyte powder, which is the same powder used in the solid-state secondary battery 1, is solidified at a pressure of 40 MPa to form a pellet with a diameter of 13 mm and a thickness of approximately 1 mm. The pellet is inserted inside a tube with an inner diameter of 13 mm, and the cathode active material layer 12, which is shaped into a circle, is placed from one side. On an opposite side, a lithium foil with a diameter of 13 mm and a thickness of 0.03 mm is placed. Additionally, stainless steel discs are placed on both sides, and the entire body is pressurized at 300 MPa for 1 minute in the axial direction of the tube in order to integrate the contents. The integrated contents are then removed from the tube and enclosed in a case to maintain a constant pressure of 22 MPa, thereby forming the test cell. The measurement of the charge capacity of the cathode active material layer 12 may be performed by applying CC charging the test cell manufactured as described above with a current of 0.1 milliampere (mA). Subsequently, CV charging can be performed up to a current of 0.02 mA.

The charge capacity density is determined by dividing the charge capacity by the weight of each active material. The initial charge capacity of the cathode active material layer 12 may refer to the charge capacity measured during the first cycle of charging. This value was used in the examples described below.

### 4. Effects of an embodiment

According to the solid-state secondary battery 1 as described above, the anode layer includes a coating layer 22, a lithium alloy layer 23, and an anode current collector. The bonding rate of the interface between the coating layer 22 and the lithium alloy layer 23 may be about 85 % to 100 %. Additionally, the total number of moles of lithium included in the solid-state secondary battery is about 30 times to about 120 times greater than the total number of moles of silver included in the solid-state secondary battery. As a result, the pressurizing process during manufacturing of the solid-state secondary battery may be omitted. Consequently, both the degree of freedom in battery size and battery shape is greatly improved, and the manufacturing costs may be considerably decreased.

### 5. Other embodiments

The solid electrolyte layer is not limited to containing only the oxide-based solid electrolyte as described above, and may also contain an oxide-based solid electrolyte and a binder, or the like.

In addition, the solid electrolyte layer is not limited to containing an oxide-based solid electrolyte, and may contain a sulfide-based solid electrolyte.

In an embodiment, a solid-state secondary battery in which a cathode layer contains an ionic liquid electrolyte has been described, but this method may be applicable to any solid-state secondary battery that includes a solid anode layer and a solid electrolyte layer. For example, it may be applicable to solid-state secondary batteries that include an electrolyte solution in addition to the solid electrolyte, or an all-solid-state secondary battery with a solid cathode layer.

Preferred embodiments of the disclosure have been described in detail above with reference to the attached drawings, but the disclosure is not limited to these examples. It is clear that a person with ordinary knowledge in the technical field to which the disclosure belongs may arrive at various modified or altered examples within the scope of the technical ideas described in the claims, and these are also naturally understood to fall within the technical scope of the disclosure.

### Examples

Hereinafter, a solid-state secondary battery of an embodiment will be described in more detail with reference to examples, but the disclosure is not limited to these examples.

### Manufacturing solid-state secondary battery

A solid-state secondary battery was manufactured according to the following procedure as shown in Table 1.

### Manufacturing solid electrolyte/anode laminate

A slurry for a coating layer using mixed particles of silver and carbon as anode active materials was prepared by the following method.

Silver with an average particle diameter of approximately 60 nm was used, and carbon black (CB), a product of Asahi Carbon Co. was used for a carbon component. 4 g of CB and 6 g of silver particles were placed in a container. An aqueous solution containing a water-soluble acrylic acid-acrylonitrile copolymer as a binder was added to the container. Water was gradually added while stirring to create a slurry.

In addition, the composition of the coating layer is as described in Table 1.

In Example 8, polyacrylic acid was used as a binder instead of the water-soluble acrylic acid-acrylonitrile copolymer. Additionally, in Table 1, the molar ratio represents the ratio of the total moles of lithium included in a cathode layer and an anode layer to the total moles of silver included in a solid-state secondary battery (Li/Ag). The total number of moles of contained in the cathode layer and the anode layer, and the total number of moles of silver contained in the solid-state secondary battery may be confirmed through composition analysis using scanning electron microscope-energy dispersive X-ray (SEM-EDX) spectroscopy or inductively coupled plasma (ICP).

Pellets of an oxide-based solid electrolyte (Li₇La₃Zr₂O₁₂: LLZO) treated with 5 mol/L phosphoric acid for 1 minute were used, followed by vacuum drying to be used on a solid electrolyte layer.

The slurry for the coating layer was applied to one side of the LLZO using a spin coater, and then vacuum-dried at 30 °C for about 12 hours to form a coating layer 22 on the LLZO. An Ag-Li alloy/Cu laminate was then laminated onto the coating layer 22 with the Ag-Li alloy surface in contact with the coating layer 22.

Subsequently, a lithium metal source (thickness: about 10 µm) was laminated on the opposite side of the LLZO (i.e., the side where the coating layer 22 was not formed), and a current was applied to create a solid electrolyte layer-anode layer composite. A current density of 80 µA/cm² was applied, and the duration of the current conduction process was controlled to achieve the charge capacity listed in Table 1.

### Manufacturing the cathode layer

LiNi_{0.8}Co_{0.15}Al_{0.05}O₂ (NCA) was used as a cathode active material, carbon nanotubes (CNT) and carbon black (CB) were used as conductive agents, and polyvinylidene fluoride (PVDF) was used as a binder, and these materials were mixed in a ratio of cathode active material:CNTCB: PVDF = 98:0.5:0.5:1 (by weight), and N-Methyl-2-pyrrolidone (NMP) was added and stirred to produce a slurry. This slurry was applied onto an Al current collector foil using a blade coater, dried in air at 80 °C for about 20 minutes, and then vacuum dried at 100 °C for 12 hours. After drying, the cathode layer was prepared by impregnating with an ionic liquid electrolyte, 2 M LiFSI/N-propyl-N-methylpyrrolidinium bis(fluoromethanesulfonyl)imide (Pyr13FSI).

### Manufacturing the solid-state secondary battery

The manufactured solid electrolyte layer-anode layer composite and the cathode layer were laminated in the order of cathode layer/solid electrolyte layer/anode layer. The laminated structure was sealed in laminate film under vacuum to produce the solid-state secondary battery without using any pressurizing process.

Portions of both the cathode current collector and anode current collector extended outside the laminate film without breaking the vacuum seal of the battery, and these exposed portions were used as terminals for the cathode layer and the anode layer, respectively.

### Evaluation of the solid-state secondary battery

The charging current density characteristics of the all-solid-state lithium secondary battery manufactured in this manner were evaluated under the following conditions.

The measurements were performed by placing the all-solid-state battery in a thermostatic chamber at 25 °C. Charging up to 4.4V and discharging down to 3V were repeated while gradually increasing the current density with each cycle. The evaluation results are shown in Table 1.

The critical current density (CCD) values in Table 1 indicate the charge current density characteristics of each battery. For example, if the value is listed as 4 mA/cm², it indicates that charging and discharging could be carried out up to a current density of 4 mA/cm² without short-circuiting.

**Table 1**

| Classificati on | Coating layer thickness (µm) | Molar ratio | Current conduction charging capacity | Bonding ratio at interface | Composition of coating layer | Critical current density [mAh/cm²] |
|---|---|---|---|---|---|---|
| | | [Li/Ag] | | (%) | | |
| | | | [mAh/cm²] | | | |
| Example 1 | 2.3 | 40 | 1.9 | 99 | Ag/CB/Binder= 60/40/3 | 4.5 |
| Example 2 | 2.3 | 30 | 1.9 | 99 | Ag/CB/Binder= 60/40/3 | 3.9 |
| Example 3 | 2.2 | 50 | 1.9 | 98 | Ag/CB/Binder= 60/40/3 | 3.7 |
| Example 4 | 2.3 | 110 | 1.9 | 97 | Ag/CB/Binder= 60/40/3 | 3.3 |
| Example 5 | 2.2 | 40 | 1.9 | 98 | Ag/CB/Binder= 60/40/2 | 4.1 |
| Example 6 | 2.5 | 40 | 1.9 | 96 | Ag/CB/Binder= 60/40/5 | 3.3 |
| Example 7 | 3.1 | 40 | 1.9 | 98 | Ag/CB/Binder= 60/40/3 | 3.1 |
| Example 8 | 2.4 | 40 | 0.6 | 85 | Ag/CB/Binder= 60/40/4 | 3.6 |
| Comparati ve Example 1 | 2.3 | 321 | 1.9 | 95 | Ag/CB/Binder= 60/40/3 | 1.3 |
| Comparati ve Example 2 | 2.3 | 27 | 1.9 | 96 | Ag/CB/Binder= 60/40/3 | 2.5 |
| Comparati ve Example 3 | 2.3 | 40 | 0 | 0 | Ag/CB/Binder= 60/40/3 | 2.1 |
| Comparati ve Example 4 | 2.3 | 40 | 0.3 | 80 | Ag/CB/Binder= 60/40/3 | 2.9 |

Based on the results in Table 1, it was found that in solid-state secondary batteries of Examples 1 to 8, the total moles of Li in the cathode layer and the anode layer are about 30 times to about 120 times greater than the total moles of Ag in the solid-state secondary battery. Additionally, the bonding rate at the interface between the coating layer and the lithium alloy layer was found to be 85 % or more. As a result, a significant suppression of short-circuiting was achieved, even when external pressurization was not applied during manufacturing. Furthermore, in Example 8, polyacrylic acid was used as a binder instead of the water-soluble acrylic acid-acrylonitrile copolymer. The same results as observed in Examples 1 to 7 were achieved in this instance.

In Comparative Example 1, the issue of voids forming in the anode layer during charging and discharging was observed when the total moles of lithium contained in the solid-state secondary battery were significantly higher than the moles of silver (in Comparative Example 1, by the second cycle).

In Comparative Example 2, the excessive amount of silver in relation to the moles of lithium resulted in the precipitation of silver, which caused issues with current concentration and related problems.

In Comparative Example 3, where no current conduction process was applied during manufacturing, and in Comparative Example 4, where the current conduction process was inadequate and the bonding rate at the interface between the coating layer and the lithium alloy layer was below 85%, Li was unevenly precipitated during charging, resulting in short-circuiting.

Based on the above results, the main purpose of external pressurization in the manufacturing process of a solid-state secondary battery is to create a uniform interface and to densify the anode layer. In Examples 1 to 8, in particular, the formation of two interfaces (between the solid electrolyte layer and the anode layer, and between the coating layer and the lithium alloy layer) was directly related to short-circuit suppression. These interfaces could be uniformly formed without pressurization by directly applying slurry onto the solid electrolyte layer and conducting a current during the formation of the anode layer, resulting in effective short-circuit suppression.

In an embodiment, the solid-state secondary battery allows the omission of the pressurizing process during manufacturing, thereby greatly increasing the freedom in battery size and shape and significantly reducing manufacturing costs by eliminating the pressurizing process.

In an embodiment, the solid-state secondary does not require an end plate or the like to apply external pressure during battery operation. Furthermore, the pressurizing process in the battery manufacturing may be omitted, which significantly enhances the freedom in battery size and battery shape, and reduces manufacturing costs.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A solid-state secondary battery, comprising:
a cathode layer including lithium,
an anode layer including lithium and silver, and
a solid electrolyte layer disposed between the cathode layer and the anode layer,
wherein the anode layer comprises a coating layer, a lithium alloy layer, and an anode current collector,
wherein a bonding rate at an interface between the coating layer and the lithium alloy layer is 85 percent to 100 percent, and
a total number of moles of lithium in the cathode layer and the anode layer is 30 times to 120 times greater than a total number of moles of silver in the solid-state secondary battery.

2. The solid-state secondary battery of claim 1,
wherein the coating layer includes a binder, and
a content of the binder is 1 weight percent to 5 weight percent based on 100 weight percent of the total weight of the coating layer;
preferably wherein the binder is a water-based binder.

3. The solid-state secondary battery of claims 1 or 2,
wherein an average thickness of the coating layer is 4 micrometer or less.

4. The solid-state secondary battery of claims 2 or 3,
wherein the binder is polyacrylic acid, a water-soluble (meth)acrylic acid-(meth)acrylonitrile copolymer, or a combination thereof;
preferably:
wherein a content of units derived from (meth)acrylic acid monomer in the water-soluble (meth)acrylic acid-(meth)acrylonitrile copolymer is 40 weight percent to 70 weight percent, and
wherein the (meth)acrylic acid monomer is (meth)acrylic acid, a metal salt of (meth)acrylic acid, an ammonium salt of (meth)acrylic acid, an amine salt of (meth)acrylic acid, or a combination thereof.

5. The solid-state secondary battery of any of claims 1-4,
wherein a porosity of the coating layer is 70 percent or more.

6. The solid-state secondary battery of any of claims 1-5,
wherein the coating layer comprises an anode active material and a carbon material, preferably wherein the carbon material comprises carbon black, graphene, carbon nanotubes, carbon nanofibers, or a combination thereof.

7. The solid-state secondary battery of claim 6,
wherein the anode active material comprises an alloy-forming element that forms an alloy or a compound with lithium via an electrochemical reaction, and
the alloy-forming element is at least one of gold, platinum, palladium, silicon, silver, aluminum, bismuth, tin, or zinc.

8. The solid-state secondary battery of claims 6 or 7,
wherein a content of the anode active material in the coating layer is 50 weight percent to 70 weight percent based on 100 weight percent of the total weight of the coating layer, and
a content of the carbon material is 30 weight percent to 50 weight percent based on 100 weight percent of the total weight of the coating layer.

9. The solid-state secondary battery of any of claims 1-8, wherein the solid electrolyte layer includes an oxide-based solid electrolyte, a sulfide-based solid electrolyte, or a combination thereof; and/or
wherein the cathode layer includes a liquid electrolyte.

10. The solid-state secondary battery of any of claims 1-9, wherein a critical current density (CCD) of the solid-state secondary battery is 3 milliampere per square centimeter or greater.

11. A method of preparing a solid electrolyte layer-anode layer composite including a solid electrolyte layer and an anode layer,
the anode layer including a coating layer, a lithium alloy layer, and an anode current collector, and
a bonding rate at the interface between the coating layer and the lithium alloy layer being 85 percent to 100 percent, the method comprising:
forming a coating layer by applying an anode slurry to a side of the solid electrolyte layer,
laminating a lithium source on a side of the solid electrolyte layer opposite from the side where the coating layer is formed, and
applying a current conduction process to form the lithium alloy layer between the coating layer and the anode current collector.

12. The method of claim 11, wherein the lithium source comprises lithium metal.

13. A method of preparing a solid-state secondary battery, the method comprising laminating a cathode layer onto the solid electrolyte layer-anode layer composite prepared by the method of claims 11 or 12,
wherein the cathode layer is not the lithium source, and following the current conduction process the cathode layer is laminated on the side of the solid electrolyte layer opposite the coating layer;
preferably wherein the lithium source comprises lithium metal.

14. A method of preparing the solid-state secondary battery of any of claims 1-10, the method comprising:
applying an anode slurry to the solid electrolyte layer to form the coating layer,
forming the anode layer by arranging the lithium alloy layer and the anode current collector on the coating layer, and
laminating the cathode layer on a side of the solid electrolyte layer opposite the side of the coating layer, and applying a current conduction process to precipitate the lithium alloy layer in the anode layer, wherein the cathode layer is a lithium source for lithium alloy layer.

15. A method of charging the solid-state secondary battery of any of claims 1-10,
wherein an average thickness change of the lithium alloy layer following the current conduction process is from 10 micrometer to 60 micrometer.
